# EUROPEAN PATENT APPLICATION

(11) **EP 4 604 331 A1**
(43) Date of publication of application: **20.08.2025**
(21) Application number: 22961906.9
(22) Date of filing: 24.11.2022
(51) Int. Cl.: H01R 13/655, H01R 13/46, H01R 24/30

(54) **MODULE WITH NETWORK INTERFACE**

(30) Priority: 11.10.2022 CN 202211240311
(71) Applicant: Accelink Technologies Co., Ltd, Wuhan City, Hubei 430074 (CN)
(72) Inventor: LUO, Yaoxin, Wuhan, Hubei 430074 (CN); SONG, Mengyang, Wuhan, Hubei 430074 (CN); LI, Feng, Wuhan, Hubei 430074 (CN); HU, Qiang, Wuhan, Hubei 430074 (CN); ZHOU, Yun, Wuhan, Hubei 430074 (CN); ZHANG, Chunyan, Wuhan, Hubei 430074 (CN)
(74) Representative: Patentgruppen A/S
(86) International application number: PCT/CN2022/133968
(87) International publication number: WO 2024/077726

(57) **Abstract**

The present invention relates to the field of optoelectronic communication and provides a module with a network interface. The module with a network interface comprises a base, a circuit assembly, and shielding elastic sheets. The base is provided with a screw seat thereon, and a first boss is provided on a side surface of the base. The circuit assembly comprises a circuit board, a network interface, and a grounding spring sheet. The circuit board is provided with a first notch which is coupled to a side wall of the screw seat; the grounding spring sheet is fixed on the circuit board and connected to the base. The shielding elastic sheet comprises two oppositely arranged side walls, each of which is provided with a folded edge, wherein the folded edge has a first buckling hole, which is buckled into the first boss to fix the shielding elastic sheet on the base. The present invention achieves the grounding of the circuit board and improves the EMC performance of the module through the setting of the shielding elastic sheet and the grounding spring sheet.

## Description

### TECHNICAL FIELD OF THE DISCLOSURE

The present invention relates to the field of optoelectronic communication technology, particularly to a module with a network interface.

### BACKGROUND

With the development of the optical communication industry, the operating frequency of optoelectronic communication modules is increasing, and they are facing increasing stronger electromagnetic interference. Thus, the requirement for the Electromagnetic Compatibility (EMC) performance of the modules is raised higher. EMC is divided into two parts: Electromagnetic Susceptibility (EMS) and Electromagnetic Interference (EMI), wherein EMS is used to evaluate the stability of the module itself, while EMI is used to evaluate the external noise level of the module.

In order to improve the EMC of the module, targeted improvements need to be made to the module, and electrostatic coupling interference and magnetic field coupling interference can be alleviated through grounding. However, it is difficult to ground the circuit board in existing modules; the principle of metal isolation can also be used to control the interference of electric or magnetic fields in one area on another area. In existing modules, electromagnetic shielding is only achieved through a shell, but there are gaps in a shielding body formed by the shell, and the interference signal cannot be completely isolated by the shell. Especially, as the frequency increases, the wavelengths of high-frequency interference signals become equivalent to the size of the gaps, and the interference signal enters the shell through the holes and gaps, causing interference to the optical module and make it unable to meet the electromagnetic shielding requirements of the module working at high frequencies.

At the same time, some existing modules require specialized auxiliary tools for assembling during installation, which is a cumbersome process. Moreover, after inserting the registered jack into the socket, due to insufficient effective positioning limiting, the network cable is easily pulled out of the socket when subjected to external forces.

Given this, overcoming the shortcomings of the existing technology is an urgent issue that needs to be solved in this technical field.

### SUMMARY

In response to the above deficiencies or improvement requirements of the existed technology, the present invention proposes a module with a network interface, for the purpose of connecting the circuit board to the base of the module through a grounding spring sheet, thus achieving large-area grounding of the circuit board. The network interface on the circuit board is arranged on a shielding elastic sheet, and the shielding elastic sheet and a module shell jointly form the shielding body of the network interface, providing double-layer shielding. Moreover, the shielding elastic sheet contacts the base of the module, which achieves large-area grounding of the shielding elastic sheet, and improves ability of the EMC on anti-electromagnetic interference, and overcomes the difficulty or even inability of grounding or large-area grounding of the circuit board of the existing module. If shielding is only achieved by the shell, high-frequency interference signals will enter the interior through the gaps of the shell, resulting in poor EMC performance and being unable to meet the requirement of high working frequency.

To achieve the above objectives, according to one aspect of the present invention, there is provided a module with a network interface, comprising a base, a circuit assembly, and shielding elastic sheets,
wherein the base is provided with a screw seat, and a first boss is provided on the side surface of the base;
wherein the circuit assembly comprises a circuit board, a network interface, and a grounding spring sheet; the circuit board is provided with a first notch thereon, which is coupled to a side wall of the screw seat; and the grounding spring sheet is fixed on the circuit board and connected to the base; and
wherein the shielding elastic sheet comprises two oppositely arranged elastic sheet side walls, each of which is provided with a folded edge; the folded edge has a first buckling hole, which is buckled into the first boss to fix the shielding elastic sheet on the base; and the network interface is arranged between the two elastic sheet side walls.

Furthermore, the shielding elastic sheet further comprises a bottom wall which is arranged between two elastic sheet side walls, and the bottom wall is provided with an extension portion which is arranged on the base and located below the grounding spring sheet; and the grounding spring sheet abuts the extension portion.

Furthermore, the bottom wall comprises a bottom surface, one end of which is provided with a connection portion, one end of which is connected to the bottom surface, and the other end of which is connected to the extension portion, wherein the extension portion is parallel to the bottom surface, and the connection portion is inclined to the bottom surface;
the base is provided with an installation surface, a first installation portion, and a second installation portion, wherein the first installation portion is arranged between the installation surface and the second installation portion, and a plane where the second installation portion is located is higher than a plane where the installation surface is located; and
the bottom surface is attached to the installation surface, the connection portion is attached to the first installation portion, and the extension portion is attached to the second installation portion.

Furthermore, the elastic sheet side walls comprise a first side surface, a second side surface, and a third side surface, wherein the first side surface is connected to the second side surface, the second side surface is connected to the third side surface, and the third side surface is connected to the bottom surface, and wherein the first side surface is parallel to the third side surface, and the second side surface is inclined to the first side surface;
a guiding sheet is provided on the first side surface, and is inclined outward;
a limiting sheet is provided on the third side surface, and a corresponding first limiting groove is provided on the base, wherein the limiting sheet is bent to fit into the first limiting groove, thereby fixing the shielding elastic sheet on the base.

Furthermore, the base is provided with a first attachment surface, a second attachment surface, and a third attachment surface, wherein the first attachment surface is connected to the second attachment surface, the second attachment surface is connected to the third attachment surface, and the third attachment surface is connected to the installation surface; wherein the second attachment surface is inclined to the first attachment surface and the third attachment surface respectively;
wherein the first side surface is attached to the first attachment surface, the second side surface is attached to the second attachment surface, and the third side surface is attached to the third attachment surface; and
wherein the second attachment surface is provided with a first limiting groove thereon, which is located adjacent to the installation surface.

Furthermore, each of the first side surfaces is provided with two protrusions thereon, and the protrusions are staggered on the two elastic sheet side walls, which play a limiting role on the registered jack after the registered jack is inserted into the network interface.

Furthermore, the module with a network interface further comprises a cover plate which is provided with screw holes, buckling protrusions, and a cover closing stopper thereon, wherein screws pass through the screw holes and enter the screw seat, fixing a rear end of the cover plate to the base; and
the base is also provided with a buckling groove and a cover closing groove, wherein when the cover plate is installed on the base, the cover closing groove is coupled to the cover closing stopper, and the buckling protrusion enters the buckling groove to fix the cover plate at a front end of the base.

Furthermore, the circuit board is also provided with a second notch thereon, and a side surface of the first notch is inwardly recessed to form the second notch, and the screw seat is provided with a platform and a semi-cylinder thereon, and the cover plate is also provided with a protruding column and a shielding wall thereon; and
when the circuit assembly is installed on the base, the semi-cylinder is located in the second notch, which serves for limiting the circuit assembly, the protruding column presses the circuit board onto the platform, and the front end of the circuit board is accommodated in the gap between the shielding wall and the base.

Furthermore, the module with a network interface further comprises a fully enclosed elastic sheet, which is provided with a buckling edge, a limiting hole, and an elastic claw,
wherein the cover plate is provided with a limiting protrusion corresponding to the limiting hole thereon, and the base is provided with a second limiting groove corresponding to the buckling edge thereon, the limiting protrusion is fitted in the limiting hole; the buckling edge is buckled into the second limiting groove, and the elastic claw holds the base and the cover plate.

Furthermore, the module with a network interface further comprises a mesh mask plate, wherein the mesh mask plate is provided with a second buckling hole and a third notch,
wherein the side surface of the base is provided with a second boss corresponding to the second buckling hole, and the second buckling hole is buckled into the second boss to fix the mesh mask plate on the base; and
wherein the base is also provided with a locking groove thereon, on which the third notch is located after the mesh mask plate is fixed on the base, and an opening size of the third notch is smaller than that of the locking groove, so that a part of the mesh mask plate next to the third notch covers a part of the locking groove, thereby limiting the registered jack.

Compared with the prior art, the beneficial effects of the embodiments of the present invention are as follows: the grounding spring sheet is arranged on the circuit board and is connected to the base of the module, thereby contacting the circuit board with the module shell, achieving large-area grounding of the circuit board, and improving the EMC performance of the module through grounding. In addition, the shielding elastic sheet is arranged in the base, and the network interface on the circuit board is arranged on the shielding elastic sheet; the shielding elastic sheet is fixed on the base by folded edges, and the shielding elastic sheet and the module shell jointly form a shielding body of the network interface, providing double-layer shielding; moreover, the shielding elastic sheet contacts the base of the module, also achieving the large-area grounding of the shielding elastic sheet and increasing the EMC performance of the network interface, which further enhances the module's EMC resistance to electromagnetic interference. In this scheme, a shielding body is arranged around the circuit board and network interface of the module, which can shield most of the interference signals. Moreover, the circuit board and network interface are large-area grounded, which can shield high-frequency interference signals entering through the gap of the shell, making it more suitable for operation at high frequencies.

In addition, the grounding spring sheet is further connected to the shielding elastic sheet; that is, the grounding spring sheet, the shielding elastic sheet, and the base are connected together. The grounding spring sheet, the shielding elastic sheet, and the base are connected to form a complete grounding connection, and the grounding connection forms a closed loop, ensuring the integrity of large-area grounding and further improving EMC performance.

Furthermore, the shielding elastic sheet is also provided with multiple protrusions thereon, and a mesh mask plate is also provided above the locking groove of the base. The protrusions can limit the shaking of the registered jack in left-right direction, and the mesh mask plate can limit the upward movement of the registered jack elastic sheet, strengthening the vertical limiting on the base. The setting of the protrusions and the mesh mask plate enhances the connection stability between the registered jack and the network interface.

### BRIEF DESCRIPTION OF THE DRAWINGS

In order to more clearly illustrate the technical solutions of the embodiments of the present invention, a brief introduction will be given below to the accompanying drawings which will be used in the embodiments of the present invention. It is obvious that the accompanying drawings described below are only some embodiments of the present invention. And for those skilled in the art, other views can be obtained based on these drawings without creative labor.
FIG. 1 is an exploded schematic diagram of a module with a network interface provided in an embodiment of the present invention;
FIG. 2 is a schematic diagram of the overall structure of a module with a network interface provided in an embodiment of the present invention;
FIG. 3 is a schematic structural diagram of a shielding elastic sheet of a module with a network interface provided in an embodiment of the present invention;
FIG. 4 is a schematic structural diagram of a circuit assembly of a module with a network interface provided in an embodiment of the present invention;
FIG. 5 is another schematic structural diagram of a circuit assembly of a module with a network interface provided in an embodiment of the present invention;
FIG. 6 is a schematic structural diagram of a cover plate of a module with a network interface provided in an embodiment of the present invention;
FIG. 7 is another schematic structural diagram of the cover plate of a module with a network interface provided in an embodiment of the present invention;
FIG. 8 is a schematic side view of the structure of the base of a module with a network interface provided in an embodiment of the present invention;
FIG. 9 is a schematic structural diagram of the base of a module with a network interface provided in an embodiment of the present invention;
FIG. 10 is another schematic structural diagram of the base of a module with a network interface provided in an embodiment of the present invention;
FIG. 11 is a schematic structural diagram of a latch of a module with a network interface provided in an embodiment of the present invention;
FIG. 12 is a schematic structural diagram of a handle of a module with a network interface provided in an embodiment of the present invention;
FIG. 13 is a schematic structural diagram of a buckling cover for a module with a network interface provided in an embodiment of the present invention;
FIG. 14 is a schematic structural diagram of a grounding spring sheet of a module with a network interface provided in an embodiment of the present invention;
FIG. 15 is another structural schematic diagram of the grounding spring sheet of a module with a network interface provided in an embodiment of the present invention;
FIG. 16 is a schematic structural diagram of a fully enclosed elastic sheet of a module with a network interface provided in an embodiment of the present invention;
FIG. 17 is a schematic structural diagram of a mesh mask plate with a network interface module provided in an embodiment of the present invention;
FIG. 18 is a schematic structural diagram of a registered jack provided in an embodiment of the present invention;
FIG. 19 is a schematic sectional structural diagram of a module with a network interface provided in an embodiment of the present invention in the state of inserting the registered jack;
FIG. 20 is a schematic structural diagram of a module with a network interface provided by an embodiment of the present invention in the state of inserting the registered jack;
FIG. 21 is a flowchart of a method for assembling a module with a network interface provided in an embodiment of the present invention.
wherein, the reference signs are listed as follows:
a base 1; a screw seat 11; a platform 111; a semi-cylinder 112; a first boss 121; a second boss 122; a third protrusion 123; a fourth protrusion 124; an installation surface 131; a first installation portion 132; a second installation portion 133; a first limiting groove 141; a second limiting groove 142; a first attachment surface 151; a second attachment surface 152; a third attachment surface 153; a buckling groove 16; a cover closing groove 17; a locking groove 18; a latch groove 191; a handle groove 192; a locking port 193; a handle seat 194;
a circuit assembly 2; a circuit board 21; a first gap notch 211; a second notch 212; a network interface 22; a grounding spring sheet 23; a movable portion 231; a bent portion 232; a limiting portion 233;
a shielding elastic sheet 3; an elastic sheet side wall 31; a first side surface 311; a second side surface 312; a third side surface 313; a folded edge 32; a first buckling hole 321; a bottom wall 33; an extension portion 331; a connection portion 332; a guiding sheet 34; a limiting sheet 35; a protrusion 36;
a cover plate 4; a screw hole 41; a buckling protrusion 42; a cover closing stopper 43; a protruding column 44; a shielding wall 45; a limiting protrusion 46;
a fully enclosed elastic sheet 5; a buckling edge 51; a limiting hole 52; an elastic claw 53;
a mesh mask plate 6; a second buckling hole 61; a third notch 62;
a latch 7; a handle 8; a buckling cover 9; a first pressing ear 91; a second pressing ear 92; a third buckling hole 93; a fourth buckling hole 94; a registered jack 10; a registered jack elastic sheet 101; an elastic sheet locking surface 102.

### DETAILED DESCRIPTION

In order to clarify the purposes, technical solutions, and advantages of the present invention, the following will provide further detailed explanations of the present invention in conjunction with the accompanying drawings and embodiments. It should be understood that the specific embodiments described herein are only used to explain the present invention rather than to limit the present invention.

In the description of the present invention, the terms "inside", "outside", "longitudinal", "horizontal", "up", "down", "top", "bottom", etc. indicate orientation or positional relationships based on the orientation or positional relationships shown in the accompanying drawings, only for the convenience of describing the present invention and not to require the present invention to be constructed and operated in a specific orientation, and therefore should not be understood as limiting the present invention.

In the present invention, unless otherwise specified and limited, the first feature being "above" or "below" the second feature may comprise either direct contact between the first and second features, or indirect contact between the first and second features through another feature between them instead of direct contact. Moreover, the first feature being "above", "over", and "on" the second feature comprises the first feature being directly above and diagonally above the second feature, or simply indicating that the first feature has a higher horizontal height than the second feature. The first feature being "below", "under", and "down" comprise the first feature being directly below and diagonally below the second feature, or simply indicating that the first feature has a lower horizontal height than the second feature.

In addition, the technical features involved in the various embodiments of the present invention described below can be combined with each other as long as they do not conflict with each other.

### Embodiment 1:

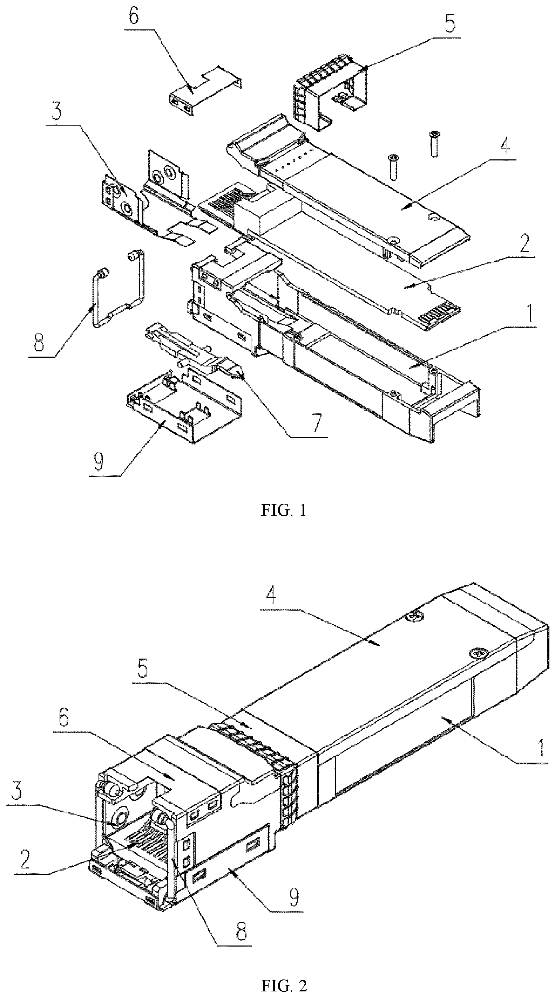

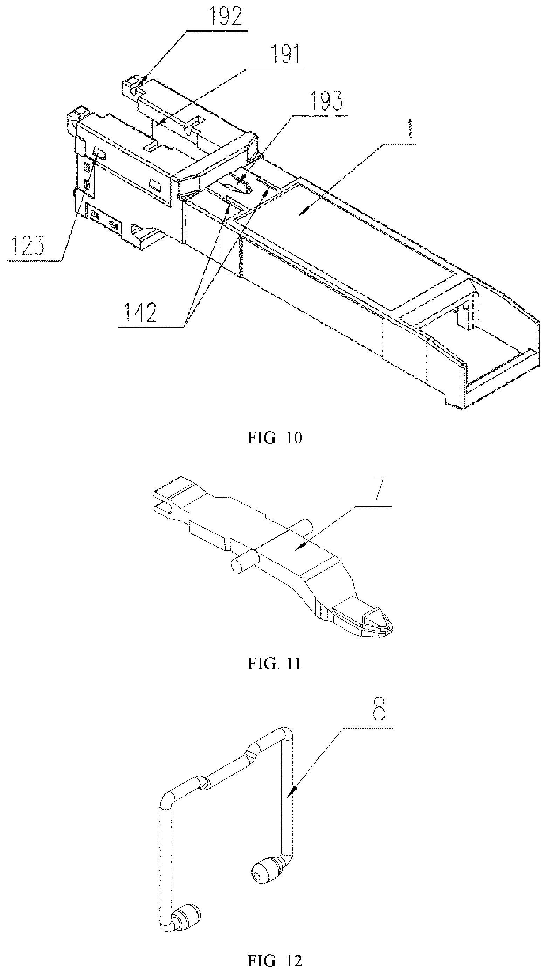

Embodiment 1 of the present invention provides a module with a network interface, as shown in FIGS. 1 to 20, comprising: a base 1, a circuit assembly 2, and a shielding elastic sheet 3,
wherein the base 1 is provided with a screw seat 11 thereon, and a first boss 121 is provided on a side surface of the base 1;
wherein the circuit assembly 2 comprises a circuit board 21, a network interface 22, and a grounding spring sheet 23; the circuit board 21 is provided with a first notch 211 thereon, which is coupled to a side wall of the screw seat 11; the grounding spring sheet 23 is fixed on the circuit board 21 and connected to the base 1; and
wherein the shielding elastic sheet 3 comprises two oppositely-arranged elastic sheet side walls 31, each of which is provided with a folded edge 32 thereon; the folded edge 32 has a first buckling hole 321, which is buckled into the first boss 121 to fix the shielding elastic sheet 3 on the base 1; and the network interface 22 is arranged between the two elastic sheet side walls 31.

In this embodiment of the present invention, the circuit board 21 is provided with the grounding spring sheet 23, which is connected to the base 1 of the module, thereby bringing the circuit board into contact with a module shell and achieving large-area grounding of the circuit board 21. Thus, the EMC performance of the module is improved by grounding. In addition, the shielding elastic sheet 3 is installed in the base 1, and the network interface on the circuit board is arranged on the shielding elastic sheet. The shielding elastic sheet is fixed to the base by folded edges, and the shielding elastic sheet and the module shell jointly form a shielding body for the network interface, providing dual layer shielding. The shielding elastic sheet contacts the base of the module and also achieves large-area grounding of the shielding elastic sheet, thereby enhancing the EMC performance of the network interface and further improving the module's EMC resistance to electromagnetic interference. In this scheme, a shielding body is arranged around the circuit board and network interface of the module, which can shield most of the interference signals. Moreover, the circuit board and the network interface are large-area grounded, which can shield high-frequency interference signals entering through the gap of the shell, making it more suitable for operation at high frequencies.

Specifically, as shown in FIGS. 1, 8, and 9, two screw seats 11 are relatively arranged on the rear portion of the base 1, and two vertically-arranged first bosses 121 are respectively arranged on the two side surfaces of a front end of the base 1.

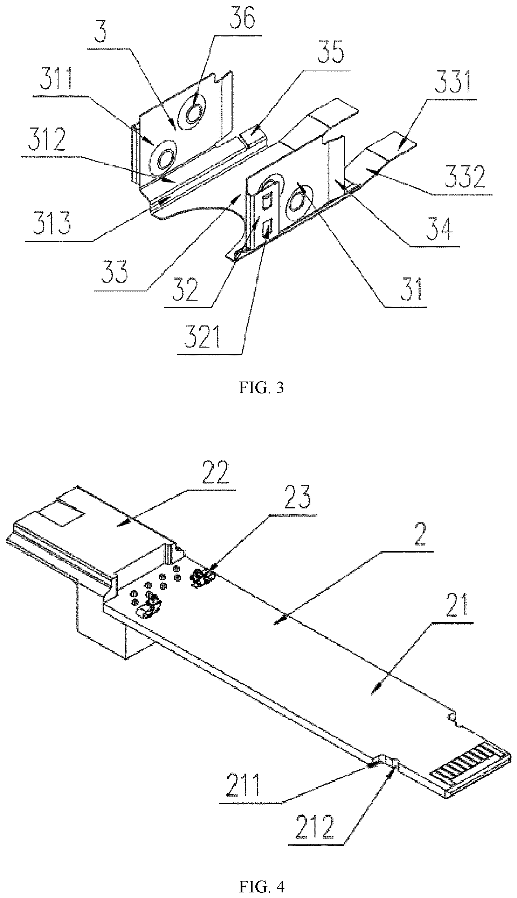

As shown in FIG. 4, in the circuit assembly 2, the network interface 22 can be an RJ45 (Registered Jack 45) socket, which is a standard 8-bit network interface. In other embodiments, it can also be other forms of network interfaces. The interface end of the network interface 22 is provided with multiple elastic probes for signal connection with a registered jack 10, and the other end of the network interface 22 is provided with multiple pins, which are fixed to the circuit board 21 and soldered to the circuit board 21. There are two symmetrically arranged first notches 211 on the circuit board 21 near the connecting finger end, and the first the notches 211 are coupled with a side wall of the screw seat 11 to achieve the limit of the circuit board 21 assembly in the horizontal plane of the base 1. A grounding spring sheet 23 is fixed on one end of the circuit board 21 near the network interface 22. The grounding spring sheet 23 is connected to the base 1, connecting the circuit board 21 and the base 1. With the base 1 grounded, the grounding of the circuit board 21 is achieved. Here, the base 1 is a portion of the module shell, which is made of metal material. After the circuit board 21 is connected to the base 1 through the grounding spring sheet 23, the circuit board 2 is made to be connected to the ground signal.

As shown in FIG. 3, the elastic sheet side wall 31 is provided with a folded edge 32, which has a first buckling hole 321. The first buckling hole 321 is buckled into the first boss 121, fixing the shielding elastic sheet 3 on the base 1. The shielding elastic sheet is also connected to the ground signal, which can improve the EMC performance of the module. The folded edge 32 is specifically divided into a first portion and a second portion. The first portion is connected to the elastic sheet side wall 31, and the second portion is vertically connected to the first portion, forming an L-shaped connection. The second portion of the folded edge 32 has two vertically arranged first buckling holes 321. The gap between the second portion of the folded edge 32 and the elastic sheet side wall 31 of the shielding elastic sheet 3 is used to accommodate the side plate of the base 1.

In this embodiment, by setting the shielding elastic sheet 3 in the base 1, the first buckling hole 321 on the shielding elastic sheet 3 is buckled into the first boss 121 on the base 1, and the shielding elastic sheet 3 is fixed on the base 1; at the same time, the circuit board 21 is provided with the grounding spring sheet 23 which abuts against the metal shell of the base 1, whereby the grounding of the circuit board 21 is achieved with the shell grounded. Under the action of the shielding elastic sheet 3 and the grounding spring sheet 23, the EMC performance of the module is improved, making it more suitable for operation at high frequencies.

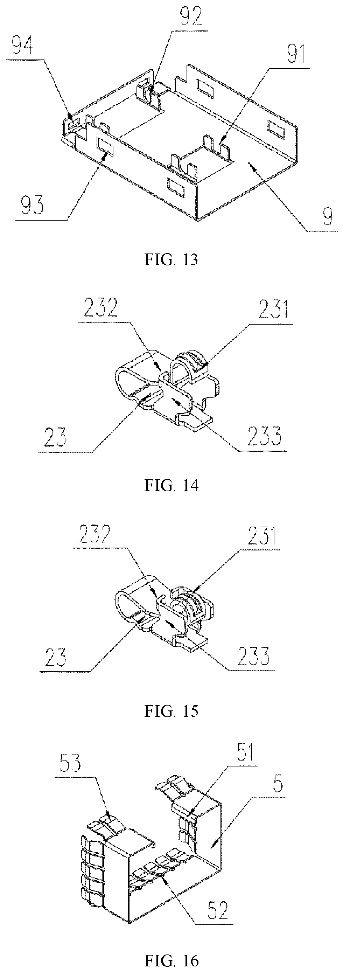

In order to better achieve the abutting between the grounding spring sheet 23 and other parts, and enable the circuit board 21 to achieve good grounding, there is also a preferred implementation scheme in combination with the embodiments of the present invention. Specifically, as shown in FIG. 14, the grounding spring sheet 23 comprises a movable portion 231, a bent portion 232, and a limiting portion 233. The bent portion 232 is connected to the movable portion 231 through an arc-shaped structure, and the limiting portion 233 clamps the position where the bent portion 232 and the movable portion 231 are connected, so that the bent portion 232 cannot move upward in its natural state. The movable portion 231 is an inverted U-shaped structure, and there is a strip-shaped protrusion along the contour of movable portion 231 in the middle position of the upper end of the movable portion 231.

After the circuit board is arranged on the base, as shown in FIG. 15, under the action of external force, the bent portion 232 deforms, and the limiting portion 233 restricts the movable portion 231 from displacing on both the left and right sides. The movable portion 231 is compressed into the limiting portion 233, and the protrusion of the movable portion 231 tightly resists the force-applying structure to achieve tight contact between the grounding spring sheet 23 and the force applying end. At the same time, the grounding spring sheet 23 and the circuit board 21 are fixed together by welding or other connection methods to ensure good conductivity between the grounding spring sheet 23 and the circuit board 21.

In order to enhance the EMC performance of the module, the shielding elastic sheet 3 and the grounding spring sheet 23 may be connected with each other. In combination with the embodiments of the present invention, there is also a preferred implementation scheme, and specifically, as shown in FIG. 3, the shielding elastic sheet 3 further comprises a bottom wall 33, which is arranged between two elastic sheet side walls 31, and an extension portion 331 is provided on the bottom wall 33. The extension portion 331 is arranged on the base 1, and the extension portion 331 is located below the grounding spring sheet 23. The grounding spring sheet 23 abuts the extension portion 331, achieving the connection between the grounding spring sheet 23 and the shielding elastic sheet. Due to abutting of the grounding spring sheet 23, the extension portion 331 of the shielding elastic sheet 3 tightly contacts the outer shell of the base 1, achieving the connection between the grounding spring sheet 23 and the metal shell of the base 1, and improving the EMC capability of the module overall.

In this embodiment, the grounding spring sheet is also connected to the shielding elastic sheet; that is, the grounding spring sheet, the shielding elastic sheet, and the base are connected together. The grounding spring sheet, the shielding elastic sheet, and the base are connected to form a complete grounding connection, and the grounding connection forms a closed loop, ensuring the integrity of large-area grounding and further improving the EMC performance.

The above briefly explains the connection relationship between the shielding elastic sheet 3, the grounding spring sheet 23, and the base 1. The following specifically explains the position relationship of the shielding elastic sheet 3 relative to the base 1, thus explaining how the shielding elastic sheet 3 is installed on the base 1.

The bottom wall 33 comprises a bottom surface (not labeled in the figure), and one end of the bottom surface is provided with a connection portion 332. One end of the connection portion 332 is connected to the bottom surface, and the other end of the connection portion 332 is connected to the extension portion 331; wherein the extension portion 331 is parallel to the bottom surface, and the connection portion 332 is inclined to the bottom surface.

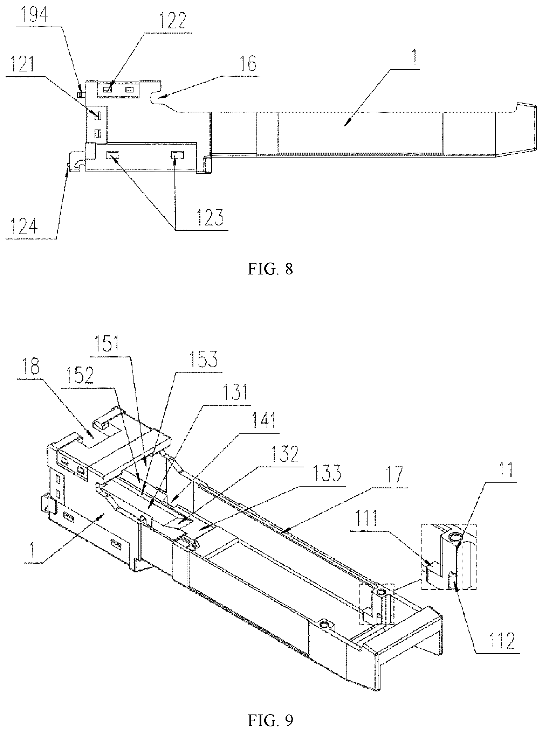

In order to ensure the attachment between the shielding elastic sheet 3 and the base 1, there is a preferred implementation scheme provided in combination with the embodiments of the present invention. Specifically, as shown in FIG. 9, the base 1 is provided with an installation surface 131, a first installation portion 132, and a second installation portion 133 thereon. The first installation portion 132 is arranged between the installation surface 131 and the second installation portion 133, and the plane where the second installation portion 133 is located is higher than the plane where the installation surface 131 is located. The bottom surface is attached to the installation surface 131, the connection portion 332 is attached to the first installation portion 132, and the extension portion 331 is attached to the second installation portion 133.

According to the aforementioned structure, the bottom wall 33 of the shielding elastic sheet 3 can be tightly attached to the base 1. The following describes other structures of the base 1, through which the elastic sheet side wall 31 is tightly attached.

As shown in FIG. 9, the base 1 is also provided with a first attachment surface 151, a second attachment surface 152, and a third attachment surface 153. The first attachment surface 151 is connected to the second attachment surface 152, the second attachment surface 152 is connected to the third attachment surface 153, and the third attachment surface 153 is connected to the installation surface 131; wherein the second attachment surface 152 is inclined to the first attachment surface 151 and the third attachment surface 153, respectively;

As shown in FIG. 3, the elastic sheet side wall 31 comprises a first side surface 311, a second side surface 312, and a third side surface 313. The first side surface 311 is connected to the second side surface 312 through a circular arc surface, the second side surface 312 is connected to the third side surface 313 through a circular arc surface, and the third side surface 313 is connected to the bottom surface through a circular arc surface. The first side surface 311 is parallel to the third side surface 313, and the second side surface 312 is inclined to the first side surface 311. The appearance of the network interface 22 on the circuit assembly 2 matches the elastic sheet side wall 31, allowing the network interface 22 to be better placed on the shielding elastic sheet 3.

The first side surface 311 is attached to the first attachment surface 151, the second side surface 312 is attached to the second attachment surface 152, and the third side surface 313 is attached to the third attachment surface 153. By setting a structure on the base 1 that is compatible with the shape of the shielding elastic sheet 3, the purpose of achieving a tight attachment between the shielding elastic sheet and the base 1 is achieved.

In order to better fix the shielding elastic sheet 3 on the base 1 and achieve the guidance of the circuit board 21 assembly during its installation on the base 1, there is also a preferred implementation scheme provided in combination with the embodiments of the present invention. Specifically, as shown in FIG. 3, a limiting sheet 35 is provided on the third side surface 313; the limiting sheet 35 may also be described as a part of the second side surface 312, except that there is a tear between it and the main body of the second side surface 312.

Referring to FIG. 9, the second attachment surface 152 on the base 1 is provided with a first limiting groove 141 which is adjacent to the installation surface 131. The limiting sheet 35 is bent to fit into the first limiting groove 141, thereby firmly fixing the shielding elastic sheet 3 on the base 1.

The first side surface 311 is provided with a guiding sheet 34, which is inclined outward. During the installation process of the circuit assembly 2, the guiding sheet 34 can guide the network interface 22, thereby making the installation of the circuit assembly 2 on the base 1 more convenient.

In order to better limit the registered jack 10 in left-right direction and prevent the registered jack 10 from easily shaking in the left and right direction under external force during use, there is also a preferred implementation scheme provided in combination with the embodiments of the present invention. Specifically, as shown in FIG. 3, each of the first side surfaces 311 is provided with two protrusions 36 thereon, and the protrusions 36 are staggered on the two spring side walls 31, which limit the registered jack 10 after the registered jack 10 is inserted into the network interface 22.

The ingenuity of this design lies in the fact that the protrusion 36 is arranged in a staggered manner on the first side surface 311 in all directions such as a front-rear direction, a right-left direction, so that any point can be taken on the two side walls 31 of the elastic sheet, and its distance meets the requirements of the MultiSource Agreement (MSA). Compared with the non-staggered setting of the protrusion 36, the depth of the protrusion 36 can reach the maximum depth required by the agreement, thereby achieving a better limiting effect on the registered jack 10.

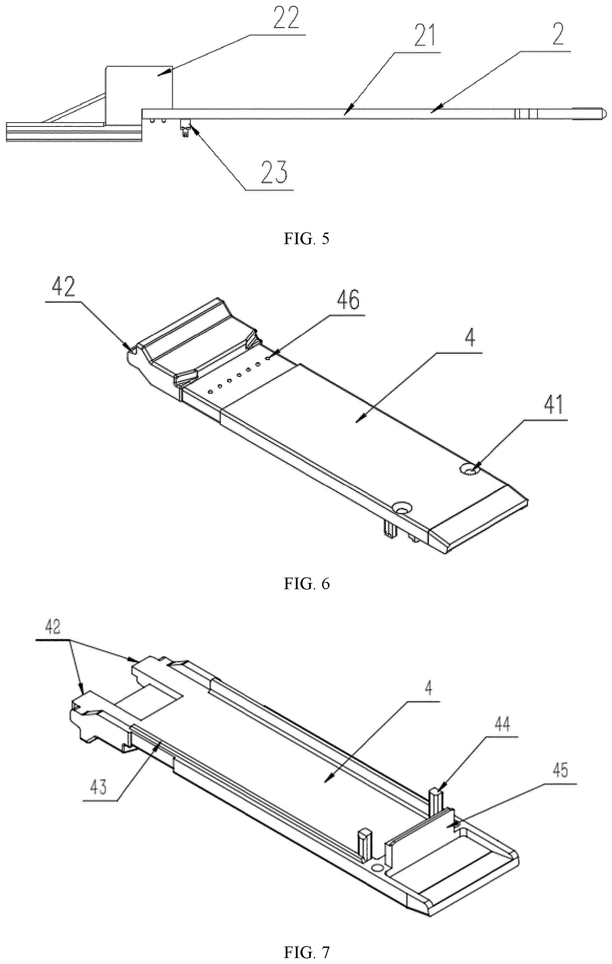

In order to better accommodate the circuit assembly 2 inside the base 1 and form a relatively enclosed space to further enhance shielding performance, there is also a preferred implementation solution provided in combination with the embodiments of the present invention. Specifically, as shown in FIGS. 6-9, the module with a network interface further comprises a cover plate 4 which is provided with screw holes 41, buckling protrusions 42, and a cover closing stopper 43 thereon. The screw holes 41 are located at a rear end of the cover plate 4, the cover closing stopper 43 are symmetrically-arranged elongated protrusions on both sides of the cover plate 4, and the buckling protrusions 42 are two symmetrically-arranged protrusions at a front end of the cover plate 4.

The base 1 is also provided with a buckling groove 16 and cover closing grooves 17. The cover closing grooves 17 are two long strip-shaped grooves provided on both sides of the base 1. The shape of the cover closing groove 17 corresponds to the cover closing stopper 43. The buckling groove 16 are provided on the two side plates at the front end of the base near the top plate of the base 1. The shape of the buckling groove 16 is adapted to the shape of the buckling protrusion 42 and the surrounding structure of the buckling protrusion 42. When the cover plate 4 is installed on the base 1, the cover closing groove 17 is coupled to the cover closing stopper 43, and the buckling protrusion 42 enters the buckling groove 16, achieving the fixation of the cover plate 4 at the front end of the base 1. The screw passes through the screw hole 41 and enters the screw seat 11, fixing the rear end of the cover plate 4 on the base 1. Meanwhile, the cover plate 4 and the base 1 jointly form a metal cage, which can provide electromagnetic shielding.

In order to better fix the circuit assembly 2 inside the base 1, there is a preferred implementation scheme provided in combination with the embodiments of the present invention. Specifically, as shown in FIGS. 4 to 9, the circuit board 21 is also provided with a second notch 212 thereon, and the side surface of the first notch 211 is recessed inward to form the second notch 212; the screw seat 11 is provided with a platform 111 and a semi-cylinder 112, and the cover plate 4 is also provided with a protruding column 44 which is set at the rear end of the cover plate 4, connected to the tip end of the cover closing stopper 43, and located at the front end of the screw hole 41, and a shielding wall 45 which is set at the rear end of the screw hole 41; the cover plate 4 is also provided with a groove which is located at the front end of the cover plate 4 and between the two buckling groove protrusions 42, and the size of the groove is adapted to the protruding structure on the upper part of the network interface 22.

When the circuit assembly 2 is installed on the base 1, the semi-cylinder 112 is located inside the second notch 212, which plays a limiting role on the circuit assembly 2. The protruding column 44 presses the circuit board 21 onto the platform 111, and the circuit board 21 is suspended inside the base 1. The front end of the circuit board 21 is accommodated in the gap between the shielding wall 45 and the base 1. The protrusion of the network interface 22 is just partially accommodated in the groove on the cover plate 4, achieving all-round limiting of the circuit assembly 2. The shielding wall 45 seals a part of the gap inside the rear end of the base 1, revealing the connecting fingers of the circuit board 21. When the module is installed on the device, it can be positioned and enhance electromagnetic shielding.

In order to better fix the cover plate 4 and the base 1 as a whole, there is a preferred implementation scheme provided in combination with the embodiments of the present invention. Specifically, as shown in FIGS. 2 and 16, the module with a network interface further comprises a fully enclosed elastic sheet 5, which is provided with a buckling edge 51, a limiting hole 52, and an elastic claw 53.

The fully enclosed elastic sheet 5 has a bottom surface, two side surfaces, and two top surfaces, wherein the two top surfaces are arranged inwardly opposite each other, and each top surface is provided with a buckling edge 51, which is perpendicular to the top surface; multiple claws 53 are arranged at predetermined intervals along the outer contour of the fully enclosed elastic sheet 5. Specifically, the elastic claws 53 are distributed at predetermined intervals throughout on the outer sides of the bottom, side, and top surfaces; semi-circular limiting holes 52 are provided between every two adjacent elastic claws 53, near the side of the fully enclosed elastic sheet 5.

A row of limiting protrusions 46 corresponding to the limiting holes 52 are provided on the cover plate 4 near the top surface of the front end. The bottom surface of the base 1 is provided with a second limiting groove 142 corresponding to the buckling edge 51. The limiting protrusions 46 are correspondingly one by one inserted into the limiting holes 52, the buckling edges 51 are buckled into the second limiting grooves 142, and the elastic claws 53 embrace the base 1 and the cover plate 4, strengthening the overall fixation of the cover plate 4 with the base 1.

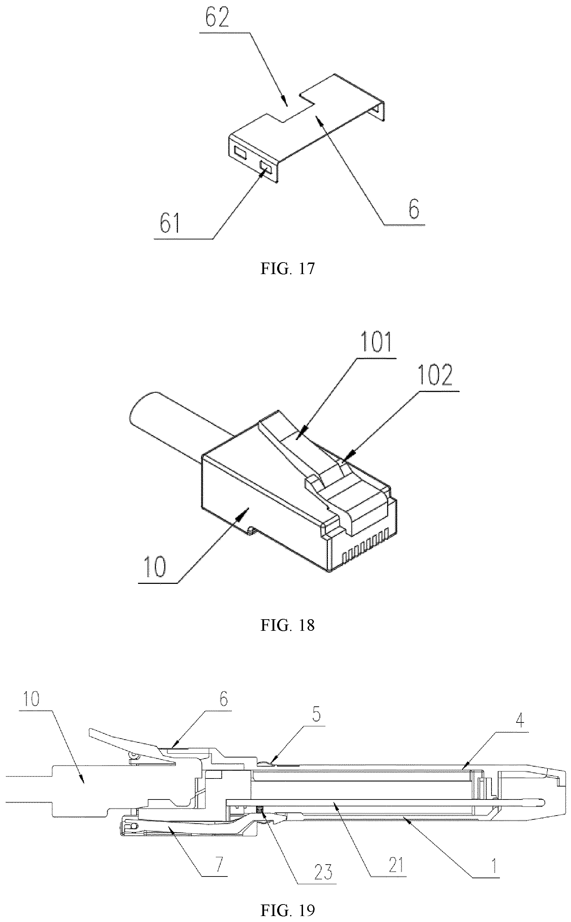

In order to better limit the registered jack 10, there is a preferred implementation scheme provided in combination with the embodiments of the present invention. Specifically, as shown in FIGS. 17-20, the module with a network interface further comprises a mesh mask plate 6, which comprises a top surface and two side surfaces. The side surface of the mesh mask plate 6 is provided with two horizontally-arranged second buckling holes 61, and the front end of the top plate is provided with a third notch 62. On the side surface of the base 1 near the top surface, there is a second boss 122 corresponding to the second buckling hole 61. The second buckling hole 61 is buckled into the second boss 122 to fix the mesh mask plate 6 on the base 1.

The base 1 is also provided with a locking groove 18 thereon. After the mesh mask plate 6 is fixed on the base 1, the third notch 62 is located above the locking groove 18, and an opening size of the third notch 62 is smaller than that of the locking groove 18, so that a part of the mesh mask plate 6 next to the third notch 62 covers a part of the locking groove 18. After the registered jack 10 enters the network interface 22, the registered jack elastic sheet 101 will reset upward from the locking groove 18, and the part of the mesh mask plate 6 next to the third notch 62 will abut the elastic sheet clocking surface 102 of the registered jack 10, restricting the movement of the registered jack elastic sheet 101, so that the entire registered jack elastic sheet 101, including the elastic sheet locking surface 102, cannot be fully reset upwards, reducing the risk of the registered jack 10 being completely detached from the network interface 22; meanwhile, due to the fact that the mesh mask plate 6 is stuck on the locking surface 102 of the elastic sheet instead of the registered jack elastic sheet 101, the registered jack elastic sheet 101 will not apply force to the registered jack 10 to detach from the network interface 22 during the upward reset process. The mesh mask plate 6 can also enhance the electromagnetic shielding of the module to a certain extent.

In order to achieve the locking and unlocking of the module with a network interface on the device, the module with a network interface further comprises a latch 7, a handle 8, and a buckling cover 9. The base 1 is also provided with a latch groove 191, a handle groove 192, a locking port 193, a handle seat 194, a third protrusion 123, and a fourth protrusion 124. The shielding elastic sheet 3 is also provided with an arc-shaped notch to avoid the movement of the latch 7.

The latch groove 191 and the handle groove 192 are both located at the bottom of the front end of the base 1. The latch groove 191 is shaped to match the locking groove 7, and the tail end of the locking groove 7 is provided with a U-shaped groove. The handle 8 is in a square shape, and the buckling cover 9 is provided with two first pressing ears 91, two second pressing ears 92, a third buckling hole 93, and a fourth buckling hole 94.

The buckling cover 9 comprises a bottom surface, two side surfaces, and a front end face. The first pressing ear 91 and the second pressing ear 92 are both plate-shaped structures with a half waist circular notch in the middle of the side. The first pressing ear 91 and the second pressing ear 92 are arranged on the bottom surface of the buckling cover 9, with two first pressing ears 91 arranged facing each other and a rectangular notch in the middle. The two second pressing ears 92 are arranged facing each other and have a rectangular notch in the middle. The position of the first pressing ear 91 corresponds to the position of the pivot groove in the latch groove 191, and the position of the second pressing ear 92 corresponds to the position of the handle groove 192. The third buckling holes 93 are two horizontally-arranged rectangular notches arranged on the side of the buckling cover 9, and the fourth buckling holes 94 are two horizontally-arranged rectangular notches arranged on the front end face of the buckling cover 9. The base 1 is provided with a third protrusion 123 corresponding to the third buckling hole 93, and a fourth protrusion 124 corresponding to the fourth buckling hole 94.

When installing the latch 7 and the handle 8, the latch 7 enters the corresponding latch groove 191, and one end of the handle 8 passes through the handle groove 192 and the U-shaped groove, while the other end is placed on the handle seat 194. When the buckling cover 9 is covered, a latch 7's rotating shaft pressing ear presses a latch 7's rotating shaft, the second pressing ear 92 presses the handle 8, the third buckling hole 93 buckles into the third protrusion 123, and the fourth buckling hole 94 buckles into the fourth protrusion 124, fixing the latch 7 and the handle 8 on the base 1. The triangular protrusion at the front end of the latch 7 fully enters the locking port 193, locking the module with a network interface to other devices.

The handle 8 is rotated from the handle seat 194 to a horizontal position, and the handle 8 is moved in the U-shaped groove inside the latch 7, thereby driving the latch 7 to rotate along an axis of the latch 7 toward the interior of the base 1, so that the triangular protrusion at the front end of the latch 7 completely disengages from the locking port 193 and enters the base 1, realizing the unlocking of the module with a network interface from other devices.

### Embodiment 2:

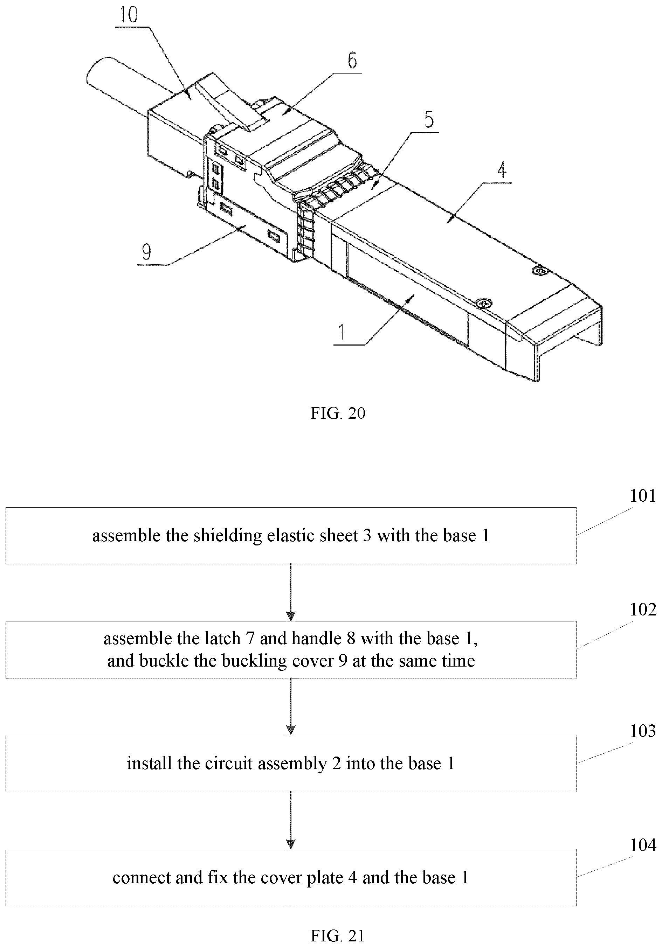

Based on the module with a network interface described in Embodiment 1, this embodiment provides an assembly method for the module with a network interface. The assembly method is applied to the module with a network interface described in Embodiment 1, and as shown in FIG. 21, it comprises Step 101-Step 104 as follows.

Step 101: assemble the shielding elastic sheet 3 with the base 1.

Step 102: assemble the latch 7 and handle 8 with the base 1, and buckle the buckling cover 9 at the same time.

Step 103: install the circuit assembly 2 into the base 1.

Step 104: connect and fix the cover plate 4 and the base 1.

Specifically, in actual use, for the combination installation of modules with network interfaces, the above steps 101 to 104 are extended in detail as following Step 201-Step 206.

Step 201: place the shielding elastic sheet 3 into the base 1, and at the same time, buckle the multiple first buckling holes 321 on the folded edge 32 into the first boss 121 on the base 1, and bend the limiting sheet 35 to fit into the first limiting groove 141, thereby completing the fixation of the shielding elastic sheet 3 on the base 1.

Step 202: place the latch 7 into the latch groove 191, pass one end of the handle 8 through the handle groove 192 and the U-shaped groove, and place the other end on the handle seat 194.

Step 203: install the buckling cover 9 on the base 1; specifically, align the second pressing ear 92 with the rotation axis of the handle 8, align the first pressing ear 91 with the rotation axis of the latch 7, and then buckle the third buckling hole 93 into the third protrusion 123, buckle the fourth buckling hole 94 into the fourth protrusion 124, so that the buckling cover 9 is tightly buckled onto the base 1, while fixing the locking handle 8 and the latch 7.

Step 204: install the circuit assembly 2 from above the base into the base 1, engage the first notch 211 to the side wall of the screw seat 11, and meanwhile fall the second notch 212 into the semi-cylinder 112, so as to locate the circuit board 21 on the platform 111 next to the screw seat 11, and to suspend the circuit board 21 inside the base 1, and then to arrange the network interface on the circuit board inside the shielding elastic sheet 3.

Step 205: install the cover plate 4 on the base 1, and enable the buckling protrusion 42 on the cover plate 4 to enter the buckling groove 16 on the base 1, so as to accommodate the cover closing stopper 43 in the cover closing groove 17, and then abut the protruding column 44 against the circuit board 21, and pass the screw through the screw hole 41 to enter the screw seat 11, firmly fixing the cover plate 4 on the base 1.

Step 206: insert the second buckling hole 61 of the mesh mask plate 6 into the second boss 122 on the base 1, and fix the mesh mask plate 6 on the base 1.

This embodiment provides a method for assembling a module with a network interface. Compared to traditional assembly methods for corresponding modules, the processes of this assembly method are simpler. It directly installs the circuit assembly 2 into the base 1 from above, avoiding the need to use other specialized auxiliary tools to push the circuit assembly 2 into the base 1 from the front end opening like existed related modules, the assembly method is simple, and the assembled module is firmly connected without requiring assembly personnel proficiency, achieving good assembly results.

The above description is only for preferred embodiments of the present invention and is not intended to limit the present invention. Any modifications, equivalent substitutions, and improvements made within the spirit and principles of the present invention should be comprised within the scope of protection of the present invention.

## Claims

1. A module with a network interface, comprising: a base (1), a circuit assembly (2), and shielding elastic sheets (3),
wherein the base (1) is provided with a screw seat (11) thereon, and a first boss (121) is provided on a side surface of the base (1);
wherein the circuit assembly (2) comprises a circuit board (21), a network interface (22), and a grounding spring sheet (23); the circuit board (21) is provided with a first notch (211) thereon, which is coupled to a side wall of the screw seat (11); and the grounding spring sheet (23) is fixed on the circuit board (21) and connected to the base (1); and
wherein the shielding elastic sheet (3) comprises two oppositely-arranged elastic sheet side walls (31), each of which is provided with a folded edge (32); the folded edge (32) has a first buckling hole (321) which is buckled into the first boss (121) to fix the shielding elastic sheet (3) on the base (1); and the network interface (22) is arranged between the two elastic sheet side walls (31).

2. The module with a network interface of claim 1, wherein the shielding elastic sheet (3) further comprises a bottom wall (33), which is arranged between two elastic sheet side walls (31); the bottom wall (33) is provided with an extension portion (331), which is arranged on the base (1) and located below the grounding spring sheet (23); and the grounding spring sheet (23) abuts the extension portion (331).

3. The module with a network interface of claim 2, wherein the bottom wall (33) comprises a bottom surface, and one end of the bottom surface is provided with a connection portion (332), one end of which is connected to the bottom surface, and the other end of which is connected to the extension portion (331); wherein the extension portion (331) is parallel to the bottom surface, and the connection portion (332) is inclined to the bottom surface;
wherein the base (1) is provided with an installation surface (131), a first installation portion (132), and a second installation portion (133) thereon, wherein the first installation portion (132) is arranged between the installation surface (131) and the second installation portion (133), and a plane on which the second installation portion (133) is located is higher than a plane on which the installation surface (131) is located; and
wherein the bottom surface is attached to the installation surface (131), the connection portion (332) is attached to the first installation portion (132), and the extension portion (331) is attached to the second installation portion (133).

4. The module with a network interface of claim 3, wherein the elastic sheet side walls (31) comprise a first side surface (311), a second side surface (312), and a third side surface (313), wherein the first side surface (311) is connected to the second side surface (312), and the second side surface (312) is connected to the third side surface (313), and the third side surface (313) is connected to the bottom surface, wherein the first side surface (311) is parallel to the third side surface (313), and the second side surface (312) is inclined to the first side surface (311);
wherein the first side surface (311) is provided with a guiding sheet (34) which is inclined outward; and
wherein a limiting sheet (35) is provided on the third side surface (313), a corresponding first limiting groove (141) is provided on the base (1), and the limiting sheet (35) is bent to fit into the first limiting groove (141), thereby fixing the shielding elastic sheet (3) on the base (1).

5. The module with a network interface of claim 4, wherein the base (1) is provided with a first attachment surface (151), a second attachment surface (152), and a third attachment surface (153) thereon, wherein the first attachment surface (151) is connected to the second attachment surface (152), the second attachment surface (152) is connected to the third attachment surface (153), and the third attachment surface (153) is connected to the installation surface (131), wherein the second attachment surface (152) is inclined to the first attachment surface (151) and the third attachment surface (153) respectively; and
wherein the first side surface (311) is attached to the first attachment surface (151), the second side surface (312) is attached to the second attachment surface (152), and the third side surface (313) is attached to the third attachment surface (153); and
wherein the second attachment surface (152) is provided with a first limiting groove (141) which is located adjacent to the installation surface (131).

6. The module with a network interface of claim 4, wherein two protrusions (36) are provided on each of the first side surfaces (311), and the protrusions (36) are staggered on the two elastic sheet side walls (31), and it limits the registered jack (10) after the registered jack (10) is inserted into the network interface (22).

7. The module with a network interface of any one of claims 1-6, wherein the module with a network interface further comprises a cover plate (4), wherein the cover plate (4) is provided with screw holes (41), buckling protrusions (42), and a cover closing stopper (43), and screws pass through the screw holes (41) into the screw seat (11) to fix a rear end of the cover plate (4) on the base (1); and
wherein the base (1) is also provided with a buckling groove (16) and a cover closing groove (17), and when the cover plate (4) is installed on the base (1), the cover closing groove (17) is coupled with the cover closing stopper (43), and the buckling protrusion (42) enters the buckling groove (16), achieving the fixation of the cover plate (4) at a front end of the base (1).

8. The module with a network interface of claim 7, wherein the circuit board (21) is further provided with a second notch (212), and a side surface of the first notch (211) is inwardly recessed to form the second notch (212); the screw seat (11) is provided with a platform (111) and a semi-cylinder (112), and the cover plate (4) is also provided with a protruding column (44) and a shielding wall (45); and
wherein when the circuit assembly (2) is installed on the base (1), the semi-cylinder (112) is located in the second notch (212) to limit the circuit assembly (2), the protruding column (44) presses the circuit board (21) onto the platform (111), and a front end of the circuit board (21) is accommodated in a gap between the shielding wall (45) and the base (1).

9. The module with a network interface of claim 7, wherein the module with a network interface further comprises a fully enclosed elastic sheet (5), on which a buckling edge (51), a limiting hole (52), and an elastic claw (53) are provided,
wherein the cover plate (4) is provided with a limiting protrusion (46) corresponding to the limiting hole (52), and the base (1) is provided with a second limiting groove (142) corresponding to the buckling edge (51), the limiting protrusion (46) being fitted into the limiting hole (52); the buckling edge (51) is buckled into the second limiting groove (142), and the elastic claw (53) holds the base (1) and the cover plate (4).

10. The module with a network interface of any one of claims 1-6, wherein the module with a network interface further comprises a mesh mask plate (6), which is provided with a second buckling hole (61) and a third notch (62),
wherein the side surface of the base (1) is provided with a second boss (122) corresponding to the second buckling hole (61), and the second buckling hole (61) is buckled into the second boss (122) to fix the mesh mask plate (6) on the base (1); and
wherein the base (1) is further provided with a locking groove (18), and after the mesh mask plate (6) is fixed on the base (1), the third notch (62) is located above the locking groove (18), and an opening size of the third notch (62) is smaller than that of the locking groove (18), so that a part of the mesh mask plate (6) next to the third notch (62) covers a part of the locking groove (18), thereby limiting the registered jack (10).
